# EUROPEAN PATENT APPLICATION

(11) **EP 3 260 806 A1**
(43) Date of publication of application: **27.12.2017**
(21) Application number: 17177052.2
(22) Date of filing: 21.06.2017
(51) Int. Cl.: F28F 9/02, B60H 1/32, F28D 9/00, F25B 41/06, F28D 21/00

(54) **INTERNAL HEAT EXCHANGER AND FREEZING CYCLE OF VEHICLE AIR CONDITIONING APPARATUS INCLUDING THE SAME**

(30) Priority: 21.06.2016 JP 2016123040
(71) Applicant: Valeo Japan Co., Ltd., Saitama 360-0193 (JP)
(72) Inventor: ARAKI, Daisuka, Saitama, Saitama 360-0193 (JP); ETO, Yoshihisa, Saitama, Saitama 360-0193 (JP); HIDEKI, Nagano, Saitama, Saitama 360-0193 (JP); HAYASHI, Naoto, Saitama, Saitama 360-0193 (JP)
(74) Representative: Tran, Chi-Hai

(57) **Abstract**

An internal heat exchanger according to the invention is to be mounted in a freezing cycle of a vehicle air conditioning apparatus. The internal heat exchanger includes a heat exchanging unit having plate-like members laminated with one another, the heat exchanging unit performing a heat exchange via a cooling medium between a first heat exchanging path and a second heat exchanging path, a cooling medium outlet inlet part through which a first inflow path and a first outflow path pass, and an expansion device connection part through which a second outflow path and a second inflow path pass, in which the expansion device connection part has a first screw path-through part, the internal heat exchanger is detachably fixed to the expansion device by a fixing member including a screw head and a screw shaft, and the screw shaft is passed through the first screw path-through part and inserted into a fourth screw path-through part provided in the expansion device.

## Description

### BACKGROUND OF THE INVENTION

### 1. Field of the Invention

The present disclosure relates to an internal heat exchanger and a freezing cycle of a vehicle air conditioning apparatus including an internal heat exchanger.

### 2. Description of the Related Art

As means for improving the cooling capability of a freezing cycle, there is a known structure in which the freezing cycle has an internal heat exchanger for exchanging heat between a cooling medium of relatively high temperature flowing from a condenser to an expansion device and a cooling medium of relatively low temperature flowing from an evaporator to a compressor (see, for example, Patent Literature 1). In the structure disclosed in Patent Literature 1, an internal heat exchanger 17 is provided in the vicinity of an air conditioning unit 30 and they are disposed in the vehicle cabin (closer to the interior than a dash panel 3). Since the internal heat exchanger in Patent Literature 1 has a tubular structure called a double pipe, the efficiency of the heat exchange is low. In contrast, there is a known internal heat exchanger having a structure in which plates are laminated with one another (see, for example, Patent Literature 2). This plate laminate type internal heat exchanger has higher heat exchange efficiency than a double pipe type internal heat exchanger.

By the way, since the expansion device used for the freezing cycle of a vehicle air conditioning apparatus immediately feeds a cooling medium having undergone adiabatic expansion into the evaporator, the expansion device is generally disposed in the vicinity of the evaporator (see, for example, Patent Literature 3). In addition, the expansion device needs to be replaced in the case of a failure. In Patent Literature 3, for example, an expansion device 1 is disposed in the vicinity of an air conditioning unit 30 and the expansion device 1 is provided so that it can be removed from an engine room E through a pipe pass-through opening 16 provided in a dash panel D since the expansion device 1 needs to be replaced.
Patent Literature 1 : JP-A-2007-055553
Patent Literature 2 : JP-A-2007-139288
Patent Literature 3 : JP-A-2007-118654

It is possible to assume the structure in which the plate laminate type internal heat exchanger in Patent Literature 2 is used in the air conditioning unit in Patent Literature 1. This air conditioning unit assumed is provided with an expansion device as a matter of course. In this case, the expansion device is certainly disposed in the cooling medium flow passage between the internal heat exchanger and the evaporator. In addition, the internal heat exchanger is disposed in the vehicle cabin. Therefore, the internal heat exchanger is disposed between the dash panel and the expansion device. Accordingly, in the air conditioning unit assumed in combination of Patent Literature 1 and Patent Literature 2, it is very difficult to dispose the expansion device in the vicinity of the dash panel as illustrated in Patent Literature 3.

However, the expansion device needs to be replaced in the case of a failure. Accordingly, it is necessary to achieve workability that does not need the replacement from the vehicle cabin in which work space cannot be obtained easily because the air conditioning apparatus and the glove box are disposed by making the expansion device replaceable from the engine room. There are no documents describing the replacement of the expansion device in the freezing cycle having the internal heat exchanger in the vehicle cabin. When the expansion device used in the freezing cycle having the internal heat exchanger is replaced from the engine room, it is necessary to remove the internal heat exchanger and the expansion device and remove the internal heat exchanger larger than the expansion device in outer dimensions.

### SUMMARY OF THE INVENTION

An object of the disclosure is to provide an internal heat exchanger for enabling the replacement of an expansion device from the engine room via a through hole provided in the dash panel and provide a freezing cycle of a vehicle air conditioning apparatus including the expansion device.

According to the invention, there is provide an internal heat exchanger to be mounted in a freezing cycle of a vehicle air conditioning apparatus including a compressor, a condenser, an expansion device, and an evaporator, the internal heat exchanger characterized by a heat exchanging unit including plate-like members laminated with one another, the heat exchanging unit performing a heat exchange via a cooling medium between a first heat exchanging path through which the cooling medium introduced from the condenser to the expansion device flows and a second heat exchanging path through which the cooling medium introduced from the evaporator to the compressor flows, a cooling medium outlet inlet part through which a first inflow path and a first outflow path pass, the cooling medium introduced from the condenser to the first heat exchanging path flowing through the first inflow path, the cooling medium introduced from the second heat exchanging path to the compressor flowing through the first outflow path, and an expansion device connection part through which a second outflow path and a second inflow path pass, the cooling medium introduced from the first heat exchanging path to the expansion device flowing through the second outflow path, the cooling medium introduced from the expansion device to the second heat exchanging path flowing through the second inflow path, in which the expansion device connection part has a first screw path-through part, the internal heat exchanger is detachably fixed to the expansion device by a fixing member including a screw head and a screw shaft, and the screw shaft is passed through the first screw path-through part and inserted into a fourth screw path-through part provided in the expansion device.

In the internal heat exchanger according to the invention, preferably, the cooling medium outlet inlet part is fixed to one of the plate-like members disposed on one surface of the heat exchanging unit, the expansion device connection part is fixed to another one of the plate-like members disposed on the other surface of the heat exchanging unit, the cooling medium outlet inlet part and the expansion device connection part are disposed back to back across the heat exchanging unit, the cooling medium outlet inlet part has a second screw path-through part in a position in which the second screw path-through part is aligned with the first screw path-through part, the heat exchanging unit has a third screw path-through part between the second screw path-through part and the first screw path-through part, and the screw shaft is passed through the second screw path-through part and the third screw path-through part. This enables the expansion device to be attached or detached more easily.

In the internal heat exchanger according to the invention, preferably, the heat exchanging unit has a groove part extending in a lamination direction of the plate-like members and the third screw path-through part is a space in the groove part. This provides difficulty in deformation of the heat exchanging unit by tightening of the fixing member.

In the internal heat exchanger according to the invention, preferably, the heat exchanging unit has projecting parts projecting in the same direction with respect to an inner layer part sandwiched between both surface layer parts of the heat exchanging unit in a lamination direction of the plate-like members, the cooling medium outlet inlet part is fixed to one projecting part of the projecting parts and the expansion device connection part is fixed to the other projecting part of the projecting parts, the projecting part to which the expansion device connection part is fixed has a first channel leading to the first screw path-through part, the projecting part to which the cooling medium outlet inlet part is fixed has a second channel leading to the second screw path-through part, and the third screw path-through part includes a space in the first channel, a space in the second channel, and a space between the first channel and the second channel. This simplifies the structure of the heat exchanging unit and improves productivity.

In the internal heat exchanger according to the invention, preferably, the cooling medium outlet inlet part is fixed to one of the plate-like members disposed on one surface of the heat exchanging unit, the expansion device connection part is fixed to another one of the plate-like members disposed on the other surface of the heat exchanging unit, the heat exchanging unit has a third screw path-through part in a position in which the third screw path-through part is aligned with the first screw path-through part, the fixing member is capable of passing through the third screw path-through part, and the screw shaft is passed through the third screw path-through part and the screw head is locked to an opening edge of the first screw path-through part. This prevents the heat exchanging unit from being deformed by tightening the fixing member.

In the internal heat exchanger according to the invention, preferably, a countersunk part is provided in an end part of the first screw path-through part, the end part being close to the plate-like members, the screw shaft is passed through the first screw path-through part, and the screw head is housed in the countersunk part. This prevents the heat exchanging unit from being deformed by tightening the fixing member.

In the internal heat exchanger according to the invention, preferably, the cooling medium outlet inlet part is disposed close to one edge of the plate-like members, the expansion device connection part is disposed close to an opposite edge of the one edge of the plate-like members so that an opening of the first screw path-through part faces the one edge, the cooling medium outlet inlet part and the expansion device connection part are disposed on the same side in a lamination direction of the plate-like members, and the screw shaft is passed through the first screw path-through part and the screw head is locked to an opening edge of the first screw path-through part. This prevents the heat exchanging unit from being deformed by tightening the fixing member.

In the internal heat exchanger according to the invention, preferably, an inlet of the first heat exchanging path, an outlet of the first heat exchanging path, an inlet of the second heat exchanging path, and an outlet of the second heat exchanging path are opened in a surface of one of the plate-like members disposed on one surface of the heat exchanging unit, the cooling medium outlet inlet part is disposed so that the first inflow path and the first outflow path are substantially parallel to a line extending from the first screw path-through part, the expansion device connection part is disposed so that the second outflow path and the second inflow path are substantially parallel to the line extending from the first screw path-through part, the internal heat exchanger has a first direction conversion member making connection between the heat exchanging unit and the cooling medium outlet inlet part and a second direction conversion member making connection between the heat exchanging unit and the expansion device connection part, the first direction conversion member has a first connection path making connection between the first inflow path and the inlet of the first heat exchanging path and a second connection path making connection between the outlet of the second heat exchanging path and the first outflow path, and the second direction conversion member has a third connection path making connection between the outlet of the first heat exchanging path and the second outflow path and a fourth connection path making connection between the second inflow path and the inlet of the second heat exchanging path. This can change the flow direction of the cooling medium more easily.

In the internal heat exchanger according to the invention, preferably, the inlet of the first heat exchanging path and the inlet of the second heat exchanging path are disposed close to the one edge of the plate-like members, the outlet of the second heat exchanging path and the outlet of the first heat exchanging path are disposed close to the opposite edge of the one edge of the plate-like members, the first direction conversion member or the second direction conversion member has a crossing part for disposing the first inflow path and the second outflow path in the part close to the one edge and the second inflow path and the first outflow path in the part close to the opposite edge by overhead-crossing the first connection path and the second connection path each other or overhead-crossing the third connection path and the fourth connection path each other, and the crossing part is not disposed in the line extending from the first screw path-through part. The common pipe layout can be used between the specification having the internal heat exchanger and the specification not having the internal heat exchanger.

In the internal heat exchanger according to the invention, preferably, the expansion device connection part has a tab part engaging the expansion device and the first screw path-through part and the tab part are disposed so as to sandwich the barycenter of the expansion device connection part when the expansion device connection part is seen from a position in which the expansion device is disposed. This enables the internal heat exchanger to be fixed to the expansion device more surely.

A freezing cycle of a vehicle air conditioning apparatus according to the invention includes the internal heat exchanger according to the invention.

According to the disclosure, it is possible to provide an internal heat exchanger in which an expansion device can be detached and attached from the engine room via a through hole provided in the dash panel and a freezing cycle of a vehicle air conditioning apparatus including the internal heat exchanger.

### BRIEF DESCRIPTION OF THE DRAWINGS

Fig. 1 is a system diagram illustrating one example of a freezing cycle including an internal heat exchanger according to the embodiment.
Fig. 2 is an exploded perspective view illustrating the structure of connection between an internal heat exchanger in a first example of the embodiment and an expansion device.
Fig. 3 is an exploded perspective view illustrating the structure of connection between an internal heat exchanger in a second example of the embodiment and the expansion device.
Fig. 4 is a perspective view illustrating an internal heat exchanger in a third example of the embodiment.
Fig. 5 is an exploded perspective view illustrating the structure of connection between an internal heat exchanger in a fourth example of the embodiment and the expansion device.

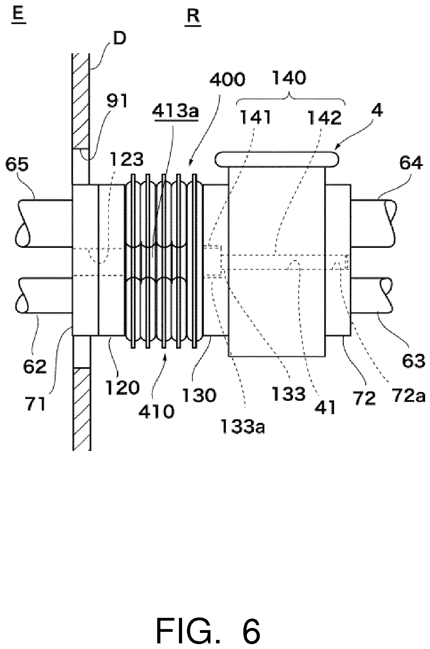

Fig. 6 is a side view illustrating a modification of the internal heat exchanger in the fourth example.
Fig. 7 is an exploded perspective view illustrating the structure of connection between an internal heat exchanger in a fifth example of the embodiment and the expansion device.
Fig. 8 is a perspective view illustrating a modification of a cooling medium outlet inlet part or an expansion device connection part.

### DESCRIPTION OF THE PREFERRED EMBODIMENTS

An aspect of the invention will be described below with reference to the attached drawings. The embodiment described below is an example of the invention and the invention is not limited to the embodiment. In the specification and drawings, components denoted by the same reference numeral are identical. Various modifications may be made as long as the effects of the invention are obtained.

An internal heat exchanger 100 according to the embodiment is to be mounted in a freezing cycle 1 of a vehicle air conditioning apparatus including a compressor 2, a condenser 3, an expansion device 4, and an evaporator 5 and includes a heat exchanging unit 110 including plate-like members laminated with one another, the heat exchanging unit 110 performing a heat exchange via a cooling medium between a first heat exchanging path 111 through which the cooling medium introduced from the condenser 3 to the expansion device 4 flows and a second heat exchanging path 112 through which the cooling medium introduced from the evaporator 5 to the compressor 2 flows, a cooling medium outlet inlet part 120 through which a first inflow path 121 and a first outflow path 122 pass, the cooling medium introduced from the condenser 3 to the first heat exchanging path 111 flowing through the first inflow path 121, the cooling medium introduced from the second heat exchanging path 112 to the compressor 2 flowing through the first outflow path 122, and an expansion device connection part 130 through which a second outflow path 132 and a second inflow path 131 pass, the cooling medium introduced from the first heat exchanging path 111 to the expansion device 4 flowing through the second outflow path 132, the cooling medium introduced from the expansion device 4 to the second heat exchanging path 112 flowing through the second inflow path 131, in which the expansion device connection part 130 has a first screw path-through part 133, the internal heat exchanger 100 is detachably fixed to the expansion device 4 by a fixing member 140 including a screw head 141 and a screw shaft 142, and the screw shaft 142 is passed through the first screw path-through part 133 and inserted into a fourth screw path-through part 41 provided in the expansion device 4.

The compressor 2 compresses a vaporized cooling medium of low temperature and low pressure by receiving a driving force from an engine (not illustrated) or receiving a driving force from a motor (not illustrated) driven by electric power and generates a vaporized cooling medium of high temperature and high pressure. The compressor 2 may be of fixed capacity type or of variable capacity type.

The condenser 3 is generally disposed on the front surface of the radiator in the engine room in the front end part (forward) of a vehicle. The condenser 3 is a heat exchanger and cools a vaporized cooling medium of high temperature and high pressure discharged from the compressor 2 using outside air in front of the vehicle introduced from the grille opening (not illustrated) provided on the front surface such as the front grille to generate a liquid cooling medium of high temperature and high pressure. Outside air is introduced through the grille opening by one or both of the travel of the vehicle and the operation of a cooling fan (not illustrated).

The expansion device 4 decompresses and expands the cooling medium condensed by the condenser 3 via throttling effects to generate an atomized cooling medium (gas-liquid mixed cooling medium) of low temperature and low pressure and adjusts the flow rate of the cooling medium.

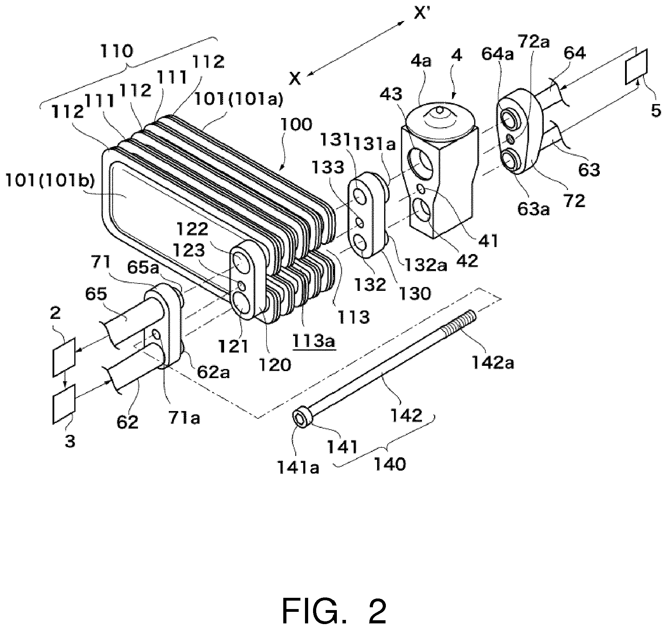

As illustrated in Fig. 2, the expansion device 4 includes the fourth screw path-through part 41, a flow passage 42 through which the cooling medium flowing to the evaporator 5 flows, and a flow passage 43 through which the cooling medium flowing from the evaporator 5 flows. The fourth screw path-through part 41 is preferably provided substantially parallel to the flow passage 43 through which the cooling medium flowing from the evaporator 5 flows. The expression "substantially parallel" means that the fourth screw path-through part 41 and the flow passage 43 are parallel to each other without crossing each other. The fourth screw path-through part 41 is a space with no obstacles provided to pass the fixing member 140 through the expansion device 4 and may be a tubular hole as illustrated in Fig. 2, a U-shaped groove, a V-shaped groove (not illustrated), or a bottomed screw hole with which the fixing member 140 is screwed.

Pipes 63 and 64 are connected to the flow passages 42 and 43 of the expansion device 4, respectively. The pipes 63 and 64 are attached to the expansion device 4 by, for example, a joint part 72. The pipes 63 and 64 preferably have coupling parts 63a and 64a projecting from the surface of the joint part 72 close to the expansion device 4. O-rings (not illustrated) are preferably attached to the outer peripheral surfaces of the coupling parts 63a and 64a. The pipes 63 and 64 can be attached to the expansion device 4 by lightly press-fitting the coupling parts 63a and 64a to the flow passages 42 and 43.

The evaporator 5 is a heat exchanger and vaporizes the cooling medium put in the gas-liquid mixed state by the expansion device 4 and cools and dehumidifies the blown air flowing through the evaporator 5 using the vaporization heat generated at this time.

The internal heat exchanger 100 includes the heat exchanging unit 110, the cooling medium outlet inlet part 120, and the expansion device connection part 130.

The heat exchanging unit 110 has a lamination structure in which a plurality of plate-like members 101 pressed in a predetermined shape are laminated in the thickness direction with one another and the first heat exchanging path 111 and the second heat exchanging path 112 are alternately arranged in parallel. The internal heat exchanger 100 having such a lamination structure may be called a plate laminate type internal heat exchanger or a plate type internal heat exchanger. A cooling medium of relatively high temperature flows through the first heat exchanging path 111 and a cooling medium of relatively low temperature flows through the second heat exchanging path 112 . In the heat exchanging unit 110, the heat exchange via the cooling medium is performed between the first heat exchanging path 111 and the second heat exchanging path 112.

The cooling medium outlet inlet part 120 is a connection part for connecting pipes 62 and 65 to the heat exchanging unit 110 . The first inflow path 121 is a cooling medium flow passage between the pipe 62 and the first heat exchanging path 111. The first outflow path 122 is a cooling medium flow passage between the second heat exchanging path 112 and the pipe 65.

The pipes 62 and 65 are attached to the cooling medium outlet inlet part 120 by, for example, a joint part 71. The pipes 62 and 65 preferably have coupling parts 62a and 65a projecting from the surface of the joint part 71 close to the heat exchanger 100. O-rings (not illustrated) are preferably attached to the outer peripheral surfaces of the coupling parts 62a and 65a. The pipes 62 and 65 may be attached to the cooling medium outlet inlet part 120 by lightly press-fitting the coupling parts 62a and 65a to the first inflow path 121 or the first outflow path 122.

The expansion device connection part 130 is a connection part for connecting the expansion device 4 to the heat exchanging unit 110. The second outflow path 132 is a cooling medium flow passage between the first heat exchanging path 111 and the flow passage 42 of the expansion device 4. The second inflow path 131 is a cooling medium flow passage between the flow passage 43 of the expansion device 4 and the second heat exchanging path 112.

The second outflow path 132 and the second inflow path 131 preferably have coupling parts 132a and 131a projecting from the surface of the expansion device connection part 130 close to the expansion device 4. O-rings (not illustrated) are preferably attached to the outer peripheral surfaces of the coupling parts 132a and 131a. The expansion device connection part 130 can be attached to the expansion device 4 by lightly press-fitting the coupling parts 132a and 131a to the flow passages 42 and 43 of the expansion device 4. The invention is not limited to the example illustrated in Fig. 2 in which the expansion device connection part 130 is directly connected to the expansion device 4 and a pipe (not illustrated) may be present between the second outflow path 132 and the flow passage 42 and between the flow passage 43 and the second inflow path 131.

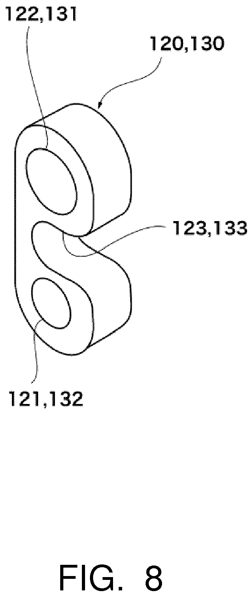

The first screw path-through part 133 is a space with no obstacles provided to pass the fixing member 140 through the expansion device connection part 130 and includes, for example, a tabular hole illustrated in Fig. 2, a U-shaped groove illustrated in Fig. 8, or a V-shaped groove (not illustrated).

The fixing member 140 is a screw-like member for detachably fixing the internal heat exchanger 100 to the expansion device 4 and is, for example, a bolt. The top surface of the screw head 141 is preferably provided with a hole 141a or a groove (not illustrated) used to rotate the fixing member 140 with a tool. Alternatively, the periphery of the screw head 141 is preferably formed in a hexagon (not illustrated) so as to rotate the fixing member 140 with a tool. Part or all of the screw shaft 142 is preferably provided with threads 142a.

The screw shaft 142 is passed through the first screw path-through part 133 and inserted into the fourth screw path-through part 41 provided in the expansion device 4. The screw shaft 142 is passed through the fourth screw path-through part 41 and inserted into a sixth screw path-through part 72a provided in the joint part 72, and screwed with the threads provided in the inner peripheral surface of the sixth screw path-through part 72a. Alternatively, the screw shaft 142 may be screwed with the threads provided in the fourth screw path-through part 41.

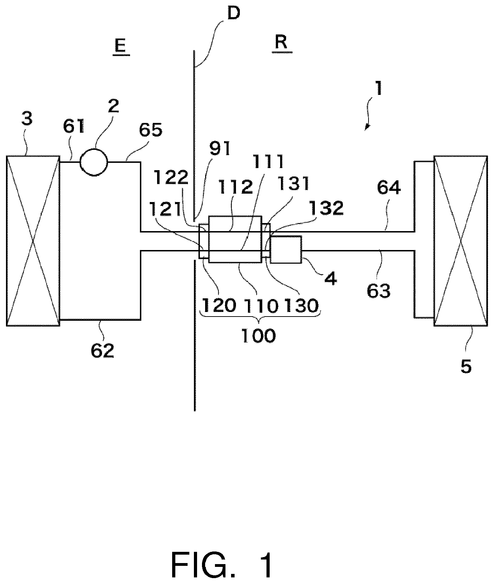

The freezing cycle 1 of the vehicle air conditioning apparatus according to the embodiment includes the internal heat exchanger 100 according to the embodiment. As illustrated in Fig. 1, the freezing cycle 1 has a closed circuit connecting the compressor 2, the condenser 3, the expansion device 4, and the evaporator 5 via pipes 61 to 65 and a cooling medium circulates through the interior of the closed circuit. The internal heat exchanger 100 is disposed in the closed circuit. The cooling medium is, for example, fluorocarbon such as R134a, HFO-1234yf, or carbon dioxide. When the cooling medium circulating through the interior is fluorocarbon, the freezing cycle 1 has a liquid tank (not illustrated) for separating the gaseous cooling medium from the liquid cooling medium and storing part of the cooling medium in the condenser 3 or between the condenser 3 and the internal heat exchanger 100. When the cooling medium circulating through the interior is carbon dioxide, the freezing cycle 1 has an accumulator (not illustrated) for storing part of the cooling medium between the evaporator 5 and the compressor 2. More preferably, the freezing cycle 1 has an accumulator (not illustrated) between the internal heat exchanger 100 and the compressor 2.

The pipe 61 directly or indirectly connects the outlet portion of the compressor 2 to the inlet portion of the condenser 3. The pipe 62 directly or indirectly connects the outlet portion of the condenser 3 to the inlet portion of the first inflow path 121. The pipe 63 directly or indirectly connects the outlet portion of the expansion device 4 to the inlet portion of the evaporator 5. The pipe 64 directly or indirectly connects the outlet portion of the evaporator 5 to the inlet portion of the second inflow path 131. The pipe 65 directly or indirectly connects the outlet portion of the first outflow path 122 to the inlet portion of the compressor 2.

Of the components of the freezing cycle 1, the compressor 2 and the condenser 3 are disposed in the engine room E and the internal heat exchanger 100, the expansion device 4, and the evaporator 5 are disposed in a vehicle cabin R. The engine room E is separated from the vehicle cabin R by the dash panel D. In the vehicle cabin R, an HVAC unit (not illustrated) is disposed. The HVAC unit includes a blower (not illustrated), the expansion device 4, the evaporator 5, an air mix door (not illustrated), a hater core (not illustrated), and the like and blows air conditioning wind into the vehicle cabin R. The dash panel D may also be referred to as a firewall or toe board.

The dash panel D has a through hole 91. The through hole 91 is large enough to pass through the expansion device 4. The through hole 91 is an opening through which a device (for example, the compressor 2 or the condenser 3) disposed in the engine room E is connected to a device (for example, the internal heat exchanger 100) disposed in the vehicle cabin R and also an opening through which the expansion device 4 is passed. In the vehicle cabin R, the internal heat exchanger 100 is disposed in the vicinity of the dash panel D. When the front of the through hole 91 is seen from the engine room E, the internal heat exchanger 100 is preferably disposed so that the cooling medium outlet inlet part 120 is present in the area surrounded by the opening edge of the through hole 91.

The internal heat exchanger according to the embodiment includes one of internal heat exchangers 100, 200, 300, 400, and 500 in the first to fifth examples depending on the aspect of fixation to the expansion device 4. The internal heat exchangers in these examples will be described.

The internal heat exchanger 100 in the first example will be described with reference to Fig. 2. In the internal heat exchanger 100 in the first example, preferably, the cooling medium outlet inlet part 120 is fixed to the plate-like member 101b disposed on one surface of the heat exchanging unit 110, the expansion device connection part 130 is fixed to the plate-like member 101a disposed on the other surface of the heat exchanging unit 110, the cooling medium outlet inlet part 120 and the expansion device connection part 130 are disposed back to back across the heat exchanging unit 110, the cooling medium outlet inlet part 120 has a second screw path-through part 123 in a position in which the second screw path-through part 123 is aligned with the first screw path-through part 133, the heat exchanging unit 110 has a third screw path-through part 113a between the second screw path-through part 123 and the first screw path-through part 133, and the screw shaft 142 is passed through the second screw path-through part 123 and the third screw path-through part 113a.

The cooling medium outlet inlet part 120 and the expansion device connection part 130 are joined to plate-like members 101b and 101a, respectively, using, for example, brazing.

The second screw path-through part 123 is a space with no obstacles provided to pass the fixing member 140 through the cooling medium outlet inlet part 120 and is, for example, a tabular hole illustrated in Fig. 2, a U-shaped groove illustrated in Fig. 8, or a V-shaped groove (not illustrated) .

The third screw path-through part 113a is a space with no obstacles provided to pass the fixing member 140 through the heat exchanging unit 110. In the internal heat exchanger 100 in the first example, the heat exchanging unit 110 has a groove part 113 extending in the lamination direction (X-X' direction) of the plate-like members 101 and the third screw path-through part 113a is preferably a space in the groove part 113.

The groove part 113 is, for example, a U-shaped groove illustrated in Fig. 2 or a V-shaped groove (not illustrated) . If the third screw path-through part 113a is a groove, since the plate-like members 101 are laminated with one another on both sides of the third screw path-through part 113a, the part to which the tightening force is applied by the fixing member 140 is strengthened. This provides difficulty in deformation of the heat exchanging unit by the tightening force by the fixing member 140. The groove part 113 is formed by laminating the plate-like members 101 having notches with one another so that their notches are aligned.

An example of the procedure for assembling the expansion device 4 in the freezing cycle 1 having the internal heat exchanger 100 in the first example will be described. The assembly work is performed from the engine room E. First, the flow passages 42 and 43 of the expansion device 4 are coupled to the coupling parts 63a and 64a to mount the expansion device 4 to the joint part 72. Next, the coupling parts 132a and 131a of the expansion device connection part 130 are coupled to the flow passages 42 and 43 of the expansion device 4 to mount the internal heat exchanger 100 to the expansion device 4. Next, the coupling parts 62a and 65a are coupled to the first inflow path 121 and the first outflow path 122 to mount the joint part 71 to the internal heat exchanger 100. Finally, the screw shaft 142 of the fixing member 140 is passed through a fifth screw path-through part 71a, the second screw path-through part 123, the third screw path-through part 113a, the first screw path-through part 133, and the fourth screw path-through part 41 provided in the joint part 71, and screwed with the threads provided in the inner peripheral surface of the sixth screw path-through part 72a. At this time, the screw head 141 is locked to the opening edge of the fifth screw path-through part 71a.

An example of the procedure for removing the expansion device 4 in the freezing cycle 1 having the internal heat exchanger 100 in the first example will be described. The removal work is performed from the engine room E. First, the fixing member 140 is removed. Next, the coupling parts 62a and 65a are pulled out of the first inflow path 121 and the first outflow path 122 and the joint part 71 is removed from the internal heat exchanger 100 . Next, the coupling parts 132a and 131a of the expansion device connection part 130 are pulled out of the flow passages 42 and 43 of the expansion device 4 by pulling the internal heat exchanger 100 toward the engine room E and the internal heat exchanger 100 is removed from the expansion device 4. Next, the internal heat exchanger 100 is moved to upward, downward, left, or right so that the expansion device 4 can be seen from the engine room E. Finally, the flow passages 42 and 43 of the expansion device 4 coupled to the coupling parts 63a and 64a are released by pulling the expansion device 4 toward the engine room E and the expansion device 4 is removed from the joint part 72.

In the internal heat exchanger 100 in the first example, the following effects can be obtained. First, the assembly and removal work of the expansion device 4 can be performed from the engine room E. Since the joint part 71, the internal heat exchanger 100, the expansion device 4, and the joint part 72 can be fixed by one fixing member 140, the attachment and detachment work of the expansion device 4 can be performed by a simpler procedure of attaching and detaching only one fixing member 140.

In the freezing cycle 1, it is preferable to use a device for preventing the expansion device 4 from dropping when the fixing member 140 is removed. The device for preventing the expansion device 4 from dropping is, for example, the attachment of the expansion device 4 to the joint part 72 is performed by coupling the flow passages 42 and 43 of the expansion device 4 to the coupling parts 63a and 64a, as illustrated in Fig. 2. Alternatively, the outer periphery of the expansion device 4 may be provided with a foamed lining (not illustrated) for attachment to an HVAC case (not illustrated) or a fixing member (not illustrated) other than the fixing member 140 may be used as the fixing member for the expansion device 4 and the joint part 72. Preferably, the fixing member other than the fixing member 140 is, for example, a grommet surrounding the periphery of the expansion device 4.

Although an example in which the joint part 71, the internal heat exchanger 100, the expansion device 4, and the joint part 72 are fixed by the fixing member 140 has been described above, the invention is not limited to this example. For example, the fixation of the internal heat exchanger 100 and the expansion device 4 may be performed by the fixing member 140 and the fixation of the joint part 71 and the internal heat exchanger 100 and the fixation of the expansion device 4 and the joint part 72 may be performed by different fixing members (not illustrated), respectively.

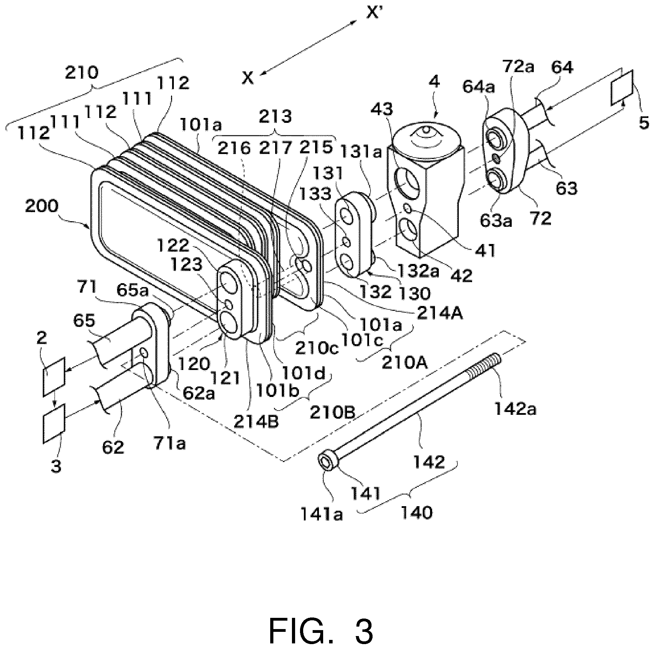

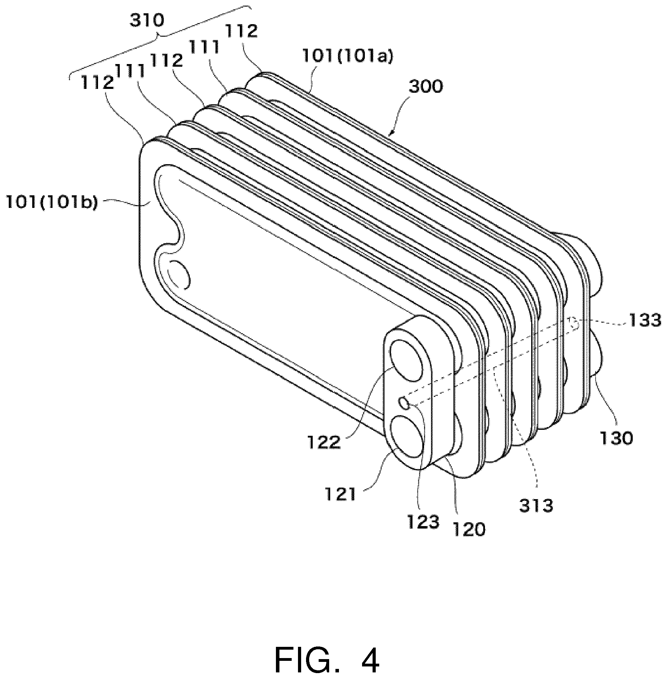

The internal heat exchangers 200 and 300 in the second example and the third example will be described with reference to Figs. 3 and 4. The internal heat exchangers 200 and 300 according to the second example and the third example will be described focusing on the differences with the internal heat exchanger 100 in the first example by omitting the descriptions of similarities.

In the internal heat exchanger 200 in the second example, as illustrated in Fig. 3, preferably, a heat exchanging unit 210 has projecting parts 214A and 214B projecting in the same direction with respect to an inner layer part 210C sandwiched between both surface layer parts 210A and 210B of the heat exchanging unit 210 in a lamination direction (X-X' direction) of the plate-like members, the cooling medium outlet inlet part 120 is fixed to one projecting part 214B of the projecting parts 214A and 214B and the expansion device connection part 130 is fixed to the other projecting part 214A, the projecting part 214A to which the expansion device connection part 130 is fixed has a first channel 215 leading to the first screw path-through part 133, the projecting part 214B to which the cooling medium outlet inlet part 120 is fixed has a second channel 216 leading to the second screw path-through part 123, and a third screw path-through part 213 includes a space in the first channel 215, a space in the second channel 216, and a space 217 between the first channel 215 and the second channel 216.

The surface layer part 210A includes the plate-like member 101a disposed on the other surface of the heat exchanging unit 210. Fig. 3 illustrates an example in which the surface layer part 210A includes the plate-like member 101a and the plate-like member 101c adjacent to the plate-like member 101a. The structure of the surface layer part 210A is not limited to this example and may further include one or more plate-like members disposed closer to the inside of the heat exchanging unit 210 than the plate-like member 101c in addition to the plate-like members 101a and 101c.

The surface layer part 210B includes the plate-like member 101b disposed on one surface of the heat exchanging unit 210. Fig. 3 illustrates an example in which the surface layer part 210B includes the plate-like member 101b and the plate-like member 101d adjacent to the plate-like member 101b. The structure of the surface layer part 210B is not limited to this example and the surface layer part 210B may further include one or more plate-like members disposed closer to the inside of the heat exchanging unit 210 than the plate-like member 101d in addition to the plate-like members 101b and 101d.

The inner layer part 210C is formed by the plate-like members other than the plate-like members 101a, 101b, 101c, and 101d included in both surface layer parts 210A and 210B.

The projecting parts 214A and 214B are formed by extending the end edges of the plate-like members 101a, 101b, 101c, and 101d constituting both the surface layer parts 210A and 210B in the same direction ahead of the end edges the plate-like members constituting the inner layer part 210C.

The first channel 215 and the second channel 216 are spaces with no obstacles provided to pass the fixing member 140 through the projecting parts 214A and 214B and these spaces may be, for example, through holes illustrated in Fig. 3, U-shaped grooves, or V-shaped grooves (not illustrated).

Since the outer shape of the plate-like members 101 can be formed in a simple shape such as a rectangular in the internal heat exchanger 200 in the second example, the structure of the heat exchanging unit is simpler and the productivity is improved.

In the internal heat exchanger 300 in the third example, preferably, a heat exchanging unit 310 has a cylindrical hollow part 313 extending in a lamination direction of the plate-like members and the third screw path-through part is a space in the cylindrical hollow part 313, as illustrated in Fig. 4. The cylindrical hollow part 313 is formed by laminating the plate-like members 101 having through holes so that the through holes are aligned. Since the third screw path-through part is surrounded by the plate-like members 101 laminated with one another, the part to which the tightening force is applied by the fixing member 140 is strengthened. This provides difficulty in deformation of the heat exchanging unit by tightening of the fixing member 140.

The assembly and removal work of the expansion device 4 in the freezing cycle 1 having the internal heat exchanger 200 or 300 in the second example or the third example is the same as in the freezing cycle having the internal heat exchanger 100 in the first example. In the internal heat exchangers 200 and 300 in the second example and the third example, the same effects as in the internal heat exchanger 100 in the first example can be obtained.

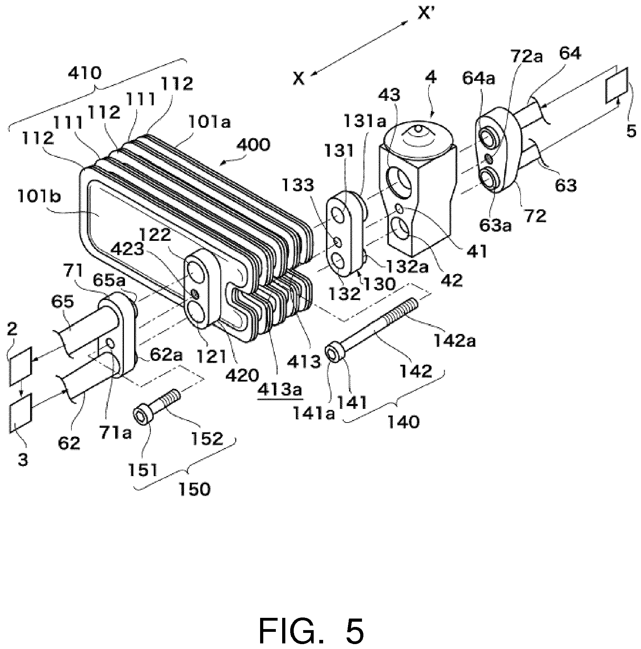

The internal heat exchanger 400 in the fourth example will be described with reference to Fig. 5. The structure of the internal heat exchanger 400 in the fourth example will be described focusing on the differences with the internal heat exchanger 100 in the first example by omitting the descriptions of similarities.

In the internal heat exchanger 400 in the fourth example, preferably a cooling medium outlet inlet part 420 is fixed to the plate-like member 101b disposed on one surface of a heat exchanging unit 410, the expansion device connection part 130 is fixed to the plate-like member 101a disposed on the other surface of the heat exchanging unit 410, the heat exchanging unit 410 has a third screw path-through part 413a in a position in which the third screw path-through part 413a is aligned with the first screw path-through part 133, the fixing member 140 is capable of passing through the third screw path-through part 413a, and the screw shaft 142 is passed through the third screw path-through part 413a and the screw head 141 is locked to an opening edge of the first screw path-through part 133.

In the internal heat exchanger 400 in the fourth example, the cooling medium outlet inlet part 420 preferably has a second screw path-through part 423. Although the second screw path-through part 123 of the internal heat exchanger 100 in the first example contributes to the fixation of the internal heat exchanger 100 and the expansion device 4, the second screw path-through part 423 of the internal heat exchanger 400 in the fourth example does not contribute to the fixation of the internal heat exchanger 400 and the expansion device 4. Specifically, when the internal heat exchanger 400 and the expansion device 4 are in the fixed state, the fixing member 140 for fixing the internal heat exchanger 400 and the expansion device 4 is not disposed in the second screw path-through part 423.

The second screw path-through part 423 of the internal heat exchanger 400 in the fourth example preferably contributes to the fixation of the joint part 71 and the internal heat exchanger 400. Specifically, a fixing member 150 different from the fixing member 140 is used for the fixation of the joint part 71 and the internal heat exchanger 400, a screw shaft 151 of the fixing member 150 is passed through the fifth screw path-through part 71a of the joint part 71 and screwed with the threads provided in the inner peripheral surface of the second screw path-through part 423. In addition, the screw head 151 is locked to the opening edge of the fifth screw path-through part 71a.

In the internal heat exchanger 400 in the fourth example, the second screw path-through part 423 does not have to be disposed in the line extending from the first screw path-through part 133 as illustrated in Fig. 5 or may be disposed in the line extending from the first screw path-through part 133 (not illustrated). The second screw path-through part 423 is more preferably not disposed in the line extending from the first screw path-through part 133. When the second screw path-through part 423 is disposed in the line extending from the first screw path-through part 133, the second screw path-through part 423 needs to have a size through which the fixing member 140 can pass.

The third screw path-through part 413a of the internal heat exchanger 400 in the fourth example is a work space for detaching and attaching the fixing member 140. When the internal heat exchanger 400 in the fourth example and the expansion device 4 are in the fixed state, the fixing member 140 for fixing the internal heat exchanger 400 and the expansion device 4 is not disposed in the third screw path-through part 413a.

The third screw path-through part 413a is preferably a space in a groove part 413 provided in the heat exchanging unit 410 as in the internal heat exchanger 100 in the first example. The invention is not limited to the example. The third screw path-through part 413a may be formed (illustrated in Fig. 3) by the space in the first channel 215, the space in the second channel 216, and the space 217 between the first channel 215 and the second channel 216 as in, for example, the internal heat exchanger 200 in the second example or may be the space (illustrated in Fig. 4) in the cylindrical hollow part 313 as in the internal heat exchanger 300 in the third example.

The internal heat exchanger 400 in the fourth example is preferably disposed so that the cooling medium outlet inlet part 420 and the third screw path-through part 413a are present in the area surrounded by the opening edge of the through hole 91 when the through hole 91 (illustrated in Fig. 1) of the dash panel D is seen from the engine room E.

In the internal heat exchanger 400 in the fourth example, preferably, a countersunk part 133a is provided in an end part of the first screw path-through part 133, the end part being close to the plate-like members 101, the screw shaft 142 is passed through the first screw path-through part 133, and the screw head 141 is housed in the countersunk part 133a. The countersunk part 133a is an enlarged-diameter part obtained by making the diameter of the end part of the first screw path-through part 133 larger than the other part.

An example of the procedure for assembling the expansion device 4 in the freezing cycle 1 including the internal heat exchanger 400 in the fourth example will be described with reference to Fig. 5. First, the individual components are mounted as in the case in which the internal heat exchanger 100 in the first example is included. Next, the fixing member 140 is passed through the third screw path-through part 413a. Then, the screw shaft 142 of the fixing member 140 is inserted into the first screw path-through part 133 and the fourth screw path-through part 41, and screwed with the threads provided in the inner peripheral surface of the fourth screw path-through part 41 or the sixth screw path-through part 72a. At this time, the screw head 141 is locked to the opening edge of the first screw path-through part 133. In addition, a screw shaft 152 of the fixing member 150 different from the fixing member 140 is passed through the fifth screw path-through part 71a of the joint part 71 and the second screw path-through part 423, and screwed with the threads provided in the inner peripheral surface of the second screw path-through part 423. At this time, the screw head 151 is locked to the opening edge of the fifth screw path-through part 71a.

An example of the procedure for removing the expansion device 4 in the freezing cycle 1 having the internal heat exchanger 400 in the fourth example will be described with reference to Fig. 5. First, a tool is inserted into the third screw path-through part 413a and the fixing member 140 is removed. In addition, the fixing member 150 is removed. Then, the expansion device 4 can be removed as in the case in which the internal heat exchanger 100 in the first example is included.

In the internal heat exchanger 400 in the fourth example, the following effects can be obtained. Since the components to be tightened by the fixing member 140 do not include the heat exchanging unit 410, the heat exchanging unit 410 can be prevented from being deformed by tightening of the fixing member 140. In addition, since the fixing member 140 can be shortened, the work from the engine room E can be facilitated.

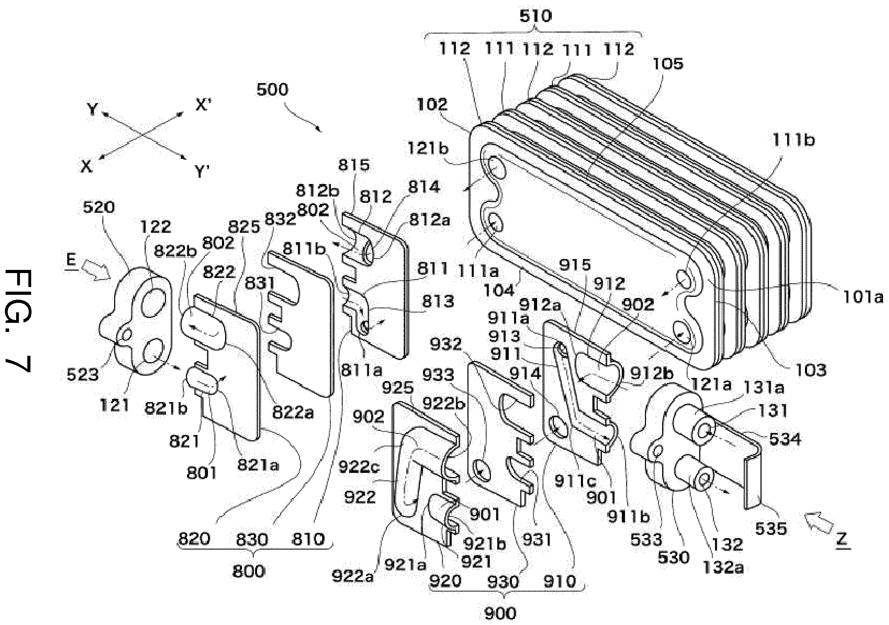

The internal heat exchanger 500 in the fifth example will be described with reference to Fig. 7. The structure of the internal heat exchanger 500 in the fifth example will be described focusing on the differences with the internal heat exchanger 100 in the first example by omitting the descriptions of similarities.

In the internal heat exchanger 500 in the fifth example, preferably, a cooling medium outlet inlet part 520 is disposed close to one edge 102 of the plate-like members, an expansion device connection part 530 is disposed close to an opposite edge 103 of the one edge 102 of the plate-like members so that the opening of a first screw path-through part 533 faces the one edge 102, the cooling medium outlet inlet part 520 and the expansion device connection part 530 are disposed on the same side in the lamination direction (X-X' direction) of the plate-like members, a screw shaft (not illustrated) is passed through the first screw path-through part 533, and a screw head (not illustrated) is locked to the opening edge of the first screw path-through part 533.

The internal heat exchanger 500 in the fifth example is significantly different from the internal heat exchangers 100, 200, 300, and 400 in the first to the fourth examples in that the plate surfaces of the plate-like members are substantially parallel to the dash panel D in the internal heat exchangers 100, 200, 300, and 400 in the first to fourth examples and the plate surfaces of the plate-like members are substantially orthogonal to the dash panel D in the internal heat exchanger 500 in the fifth example.

When the plate-like members are, for example, rectangular, the one edge 102 of the plate-like members is preferably one shorter edge and the opposite edge 103 is preferably the other shorter edge.

The cooling medium outlet inlet part 520 preferably has the second screw path-through part 523. The second screw path-through part 523 does not contribute to the fixation of the internal heat exchanger 500 and the expansion device. Specifically, when the internal heat exchanger 500 and the expansion device are in the fixed state, the fixing member for fixing the internal heat exchanger 500 and the expansion device is not disposed in the second screw path-through part 523.

The second screw path-through part 523 does not have to be disposed in the line extending from the first screw path-through part 533 or may be disposed in the line extending from the first screw path-through part 533. When the second screw path-through part 523 is disposed in the line extending from the first screw path-through part 533, the second screw path-through part 523 needs to have a size through which the fixing member for fixing the internal heat exchanger 500 and the expansion device 4 can pass.

The expansion device connection part 530 is disposed so that the opening of the first screw path-through part 533 faces the one edge 102. The direction toward the one edge 102 is the same as the direction toward the engine room E. Because of the disposition so that the opening of the first screw path-through part 533 faces the one edge 102, the fixing member can be detached and attached from the engine room E.

The disposition of the cooling medium outlet inlet part 520 and the expansion device connection part 530 on the same side in the lamination direction (X-X' direction) of the plate-like members means that the cooling medium outlet inlet part 520 and the expansion device connection part 530 are present on a surface extending from the surface of the plate-like member 101a disposed on one surface of a heat exchanging unit 510 or present in a space opposite to the heat exchanging unit 510 across the surface extending from the surface of the plate-like member 101a.

In the internal heat exchanger 500 in the fifth example, preferably, an inlet 111a of the first heat exchanging path, an outlet 111b of the first heat exchanging path, an inlet 121a of the second heat exchanging path, and an outlet 121b of the second heat exchanging path are opened in a surface of the plate-like member 101a disposed on the one surface of the heat exchanging unit 510, the cooling medium outlet inlet part 520 is disposed so that the first inflow path 121 and the first outflow path 122 are substantially parallel to a line extending from the first screw path-through part 533, the expansion device connection part 530 is disposed so that the second outflow path 132 and the second inflow path 131 are substantially parallel to the line extending from the first screw path-through part 533, the internal heat exchanger 500 has a first direction conversion member 800 making connection between the heat exchanging unit 510 and the cooling medium outlet inlet part 520 and a second direction conversion member 900 making connection between the heat exchanging unit 510 and the expansion device connection part 530, the first direction conversion member 800 has a first connection path 801 making connection between the first inflow path 121 and the inlet 111a of the first heat exchanging path and a second connection path 802 making connection between the outlet 121b of the second heat exchanging path to the first outflow path 122, and the second direction conversion member 900 has a third connection path 901 making connection between the outlet 111b of the first heat exchanging path and the second outflow path 132 and a fourth connection path 902 making connection between the second inflow path 131 and the inlet 121a of the second heat exchanging path.

In the internal heat exchanger 500 in the fifth example, the first inflow path 121 and the first outflow path 122 are disposed substantially parallel to the line extending from the first screw path-through part 533. In addition, the second outflow path 132 and the second inflow path 131 are disposed substantially parallel to the line extending from the first screw path-through part 533. The expression "disposed substantially parallel" means that, in the case of the first inflow path 121 and the first outflow path 122, the first inflow path 121 and the first outflow path 122 extend without crossing the line extending from the first screw path-through part 533. The expression "substantially parallel" includes the state in which the line extending from the first screw path-through part is inclined with respect to the center axis of the first inflow path 121 or the first outflow path 122 within, for example, ±5 degrees in addition to the state of "strictly parallel".

In the internal heat exchanger 500 in the fifth example, preferably, the expansion device connection part 530 has a tab part 535 engaging the expansion device (not illustrated) and the first screw path-through part 533 and the tab part 535 are disposed so as to sandwich the barycenter of the expansion device connection part 530 when the expansion device connection part 530 is seen from a position Z in which the expansion device is disposed. The tab part 535 is provided at the end of an extending part 534 extending, to a position Z in which the expansion device is disposed, from the surface of the expansion device connection part 530 close to the position Z. The extending part 534 may be integrated with or separated from the expansion device connection part 530. The expansion device connection part 530 is fixed to both side surfaces of the expansion device by engaging the tab part 535 with the expansion device and passing the fixing member (not illustrated) through the first screw path-through part 533 and the fourth screw path-through part of the expansion device. As a result, the internal heat exchanger 500 can be fixed to the expansion device without rattles.

The first direction conversion member 800 includes the first plate 810 disposed close to the heat exchanging unit 510, the second plate 820 disposed on the opposite side of the heat exchanging unit 510, and an intermediate plate 830 disposed between the first plate 810 and the second plate 820.

The first plate 810 includes a first communication port 813 leading to the inlet 111a of the first heat exchanging path, a second communication port 814 leading to the outlet 121b of the second heat exchanging path, a first connection path formation swelling part 811 forming the first connection path 801 by swelling the plate outward, and the second connection path formation swelling part 812 forming the second connection path 802 by swelling the plate outward. One end part 812a and the other end part 812b of the second connection path formation swelling part 812 are disposed closer to one edge 815 of the first plate 810 than one end part 811a and the other end part 811b of the first connection path formation swelling part 811.

The second plate 820 includes the first connection path formation swelling part 821 forming the first connection path 801 by swelling the plate outward and the second connection path formation swelling part 822 forming the second connection path 802 by swelling the plate outward. One end part 822a and the other end part 822b of the second connection path formation swelling part 822 are disposed closer to one edge 825 of the second plate 820 than one end part 821a and the other end part 821b of the first connection path formation swelling part 821.

The intermediate plate 830 includes the first notch 831 for making connection between the first connection path formation swelling part 811 of the first plate 810 and the first connection path formation swelling part 821 of the second plate 820 and the second notch 832 for making connection between the second connection path formation swelling part 812 of the first plate 810 and the second connection path formation swelling part 822 of the second plate 820.

The first direction conversion member 800 disposes the first plate 810 and the second plate 820 so that the one edge 815 of the first plate 810 and the one edge 825 of the second plate 820 are present on the same side and joins the first plate 810 and the second plate 820 with the intermediate plate 830 sandwiched therebetween. Accordingly, the first connection path 801 is formed by superimposing the first connection path formation swelling part 811 of the first plate 810, the first notch 831 of the intermediate plate 830, and the first connection path formation swelling part 821 of the second plate 820 each other. In addition, the second connection path 802 is formed by superimposing, the second connection path formation swelling part 812 of the first plate 810, the second notch 832 of the intermediate plate 830, and the second connection path formation swelling part 822 of the second plate 820 each other. At this time, the first connection path 801 and the second connection path 802 are not overhead-crossed each other. Although the method for joining the individual plates is not particularly limited, the method is, for example, brazing.

The first direction conversion member 802 is fixed to the heat exchanging unit 510 as described below. The outer surface of the first plate 810 is joined to the surface of the plate-like member 101a disposed on one surface of the heat exchanging unit 510 . At this time, the outer surface is joined so that the first communication port 813 and the second communication port 814 are aligned with the inlet 111a of the first heat exchanging path and the outlet 121b of the second heat exchanging path, respectively. This fixes the first direction conversion member 800 to the heat exchanging unit 510. In addition, the first connection path 801 and the second connection path 802 are joined to the first inflow path 121 and the first outflow path 122. This fixes the first direction conversion member 800 to the cooling medium outlet inlet part 520.

The second direction conversion member 900 includes a first plate 910 disposed close to the heat exchanging unit 510, a second plate 920 disposed on the opposite side of the heat exchanging unit 510, and an intermediate plate 930 disposed between the first plate 910 and the second plate 920.

The first plate 910 includes a third communication port 913 leading to the outlet 111b of the first heat exchanging path, a fourth communication port 914 leading to the inlet 121a of the second heat exchanging path, a third connection path formation swelling part 911 forming the third connection path 901 by swelling the plate outward, and a fourth connection path formation swelling part 912 forming the fourth connection path 902 by swelling the plate outward. The third connection path formation swelling part 911 has a bent part 911c and an end part 911a leading to the third communication port 913 of the third connection path formation swelling part 911 is present close to one edge 915 of the first plate 910 than an end part 911b leading to the second outflow path 132 of the third connection path formation swelling part 911. One end part 912a and the other end part 912b of the fourth connection path formation swelling part 912 are present closer to the one end 915 of the first plate 910 than an end part 911b leading to the second outflow path 132 of the third connection path formation swelling part 911.

The second plate 920 has a third connection path formation swelling part 921 forming the third connection path 901 by swelling the plate outward and a fourth connection path formation swelling part 922 forming the fourth connection path 902 by swelling the plate outward. The fourth connection path formation swelling part 922 has a bent part 922c and an end part 922b leading to the second inflow path 131 of the fourth connection path formation swelling part 922 is present closer to one edge 925 of the second plate 920 than an end part 922a leading to the fourth communication port 914 of the fourth connection path formation swelling part 922. In addition, the end part 922b leading to the second inflow path 131 of the fourth connection path formation swelling part 922 is present closer to the one edge 925 of the second plate 920 than one end part 921a and the other end part 921b of the third connection path formation swelling part 921.

The intermediate plate 930 includes the first notch 931 making connection between the third connection path formation swelling part 911 of the first plate 910 and the third connection path formation swelling part 921 of the second plate 920, the second notch 932 making connection between the fourth connection path formation swelling part 912 of the first plate 910 and the fourth connection path formation swelling part 922 of the second plate 920, and a through hole 933 making connection between the fourth communication port 914 and the fourth connection path formation swelling part 922.

The second direction conversion member 900 disposes the first plate 910 and the second plate 920 so that the one edge 915 of the first plate 910 and the one edge 925 of the second plate 920 are present on the same side and joins the first plate 910 and the second plate 920 with the intermediate plate 930 sandwiched therebetween. Accordingly, the third connection path 901 is formed by superimposing the third connection path formation swelling part 911 of the first plate 910, the first notch 931 of the intermediate plate 930, and the third connection path formation swelling part 921 of the second plate 920. In addition, the fourth connection path 902 is formed by superimposing the fourth connection path formation swelling part 912 of the first plate 910, the second notch 932 of the intermediate plate 930, and the fourth connection path formation swelling part 922 of the second plate 920. At this time, the third connection path 901 and the fourth connection path 902 are overhead-crossed each other. Although the method for joining the individual plates is not particularly limited, the method is, for example, brazing.

In addition, the third connection path 901 is preferably disposed downward of the fourth connection path 902 in the vehicle. Since an element part 4a (illustrated in Fig. 2) of the expansion device can be disposed toward upward in the vehicle, the good operability of the expansion device 4 can be obtained.

In the internal heat exchanger 500 in the fifth example, preferably, the inlet 111a of the first heat exchanging path and the inlet 121a of the second heat exchanging path are disposed close to one edge 104 of the plate-like members, the outlet 121b of the second heat exchanging path and the outlet 111b of the first heat exchanging path are disposed close to the opposite edge 105 of the one edge 104 of the plate-like members, the second direction conversion member 900 has a crossing part for disposing the first inflow path 121 and the second outflow path 132 close to the one edge 104 and the second inflow path 131 and the first outflow path 122 close to an opposite edge 105 by overhead-crossing the third connection path 901 and the fourth connection path 902 each other, and the crossing part is not disposed in the line extending from the first screw path-through part 533.

When the plate-like members are, for example, rectangular, the one edge 104 of the plate-like members is preferably one longer edge and the opposite edge 105 is preferably the other longer edge.

When the third connection path 901 and the fourth connection path 902 are overhead-crossed each other, the crossing parts are the third connection path formation swelling part 911 of the first plate 910 and the fourth connection path formation swelling part 922 of the second plate 920. Since the third connection path formation swelling part 911 and the fourth connection path formation swelling part 922 have the bent parts 911c and 922c, respectively, the third connection path 901 and the fourth connection path 902 are overhead-crossed each other and the first inflow path 121 and the second outflow path 132 are disposed close to the one edge 104 and the second inflow path 131 and the first outflow path 122 are disposed close to the opposite edge 105. As a result, the layouts of the pipes 62, 63, 64, and 65 (illustrated in Fig. 1) can be the same between the specification having the internal heat exchanger 500 and the specification not having the internal heat exchanger 500. In addition, since the crossing parts (third connection path formation swelling part 911 and fourth connection path formation swelling part 922) are not disposed in the line extending from the first screw path-through part 533, the work space for detaching and attaching the fixing member from the engine room is obtained.

Although Fig. 7 illustrates the example in which the first connection path 801 and the second connection path 802 do not overhead-cross each other and the third connection path 901 and the fourth connection path 902 overhead-cross each other, the invention is not limited to this example and the first connection path 801 and the second connection path 802 may overhead-cross each other and the third connection path 901 and the fourth connection path 802 do not have to overhead-cross each other. By applying the structure of the second direction conversion member 900 to the first direction conversion member 800, the first connection path 801 and the second connection path 802 can be overhead-crossed each other.

The second direction conversion member 900 is fixed to the heat exchanging unit 510 as described below. The outer surface of the first plate 910 is joined to the surface of the plate-like member 101a disposed on one surface of the heat exchanging unit 510 . At this time, the outer surface is joined so that the third communication port 913 and the fourth communication port 914 are aligned with the outlet 111b of the first heat exchanging path and the inlet 121a of the second heat exchanging path, respectively. This fixes the second direction conversion member 900 to the heat exchanging unit 510. In addition, the third connection path 901 and the fourth connection path 902 are joined to the second outflow path 132 and the second inflow path 131 . This fixes the second direction conversion member 900 to the expansion device connection part 530.

The first direction conversion member 800 and the second direction conversion member 900 can change the flow direction of the cooling medium from the direction along the lamination direction (X-X' direction) of the heat exchanging unit 510 to the direction (Y-Y' direction) orthogonal to the lamination direction.

An example of the procedure for assembling the expansion device in the freezing cycle having the internal heat exchanger 500 in the fifth example will be described. First, the individual components are mounted as in the case in which the internal heat exchanger 400 in the fourth example is included. Next, the fixing member is passed from the engine room E toward the first screw path-through part 533 along the plate surface of the plate-like member 101a. Then, the screw shaft of the fixing member 140 (illustrated in Fig. 5) is inserted into the first screw path-through part 533 and the fourth screw path-through part 41 (illustrated in Fig. 5) and screwed with the threads provided in the inner peripheral surface of the fourth screw path-through part 41 or the sixth screw path-through part 72a (illustrated in Fig. 5) . At this time, the screw head is locked to the opening edge of the first screw path-through part 533. In addition, as in the internal heat exchanger 400 in the fourth example illustrated in Fig. 5, the joint part 71 (illustrated in Fig. 5) and the cooling medium outlet inlet part 520 are tightened by the fixing member 150 (illustrated in Fig. 5) different from the fixing member 140 (illustrated in Fig. 5).

An example of the procedure for removing the expansion device in the freezing cycle having the internal heat exchanger 500 in the fifth example will be described. First, the fixing member 140 (illustrated in Fig. 5) for fixing the expansion device connection part 530 and the expansion device 4 (illustrated in Fig. 5) is removed. In addition, the fixing member 150 (illustrated in Fig. 5) for fixing the joint part 71 (illustrated in Fig. 5) and the cooling medium outlet inlet part 520 is removed. Then, the expansion device 4 can be removed as in the case in which the internal heat exchanger 400 in the fourth example is included.

In the internal heat exchanger 500 in the fifth example, the following effects can be obtained. Since the components to be tightened by the fixing member do not include the heat exchanging unit 510, the heat exchanging unit 510 can be prevented from being deformed by tightening of the fixing member. In addition, since the fixing member can be shortened, the work from the engine room E can be facilitated.

### Description of Reference Numerals and Signs

1: freezing cycle
2: compressor
3: condenser
4: expansion device
4a: element part
5: evaporator
41: fourth screw path-through part
42, 43: flow passage of expansion device 61 to 65: pipe
62a, 63a, 64a, 65a, 131a, 132a: coupling part
71, 72: joint part
71a: fifth screw path-through part
72a: sixth screw path-through part
91: through hole
100, 200, 300, 400, 500: internal heat exchanger
101, 101a, 101b, 101c, 101d: plate-like member
102: one edge of plate-like member
103: opposite edge of plate-like member
104: one edge of plate-like member
105: opposite edge of plate-like member
110, 210, 310,410, 510: heat exchanging unit
111: first heat exchanging path
112: second heat exchanging path
113, 413: groove part
113a, 213, 413a: third screw path-through part
120, 420, 520: cooling medium outlet inlet part
121: first inflow path
122: first outflow path
123, 423, 523: second screw path-through part
130, 530: expansion device connection part
131: second inflow path
132: second outflow path
133, 533: first screw path-through part
133a: countersunk part
140: fixing member
141: screw head
141a: hole
142: screw shaft
142a: thread
150: fixing member
151: screw head
152: screw shaft
210A, 210B: surface layer part
210C: inner layer part
214A, 214B: projecting part
215: first channel
216: second channel
217: space
313: cylindrical hollow part
535: tab part
534: extending part
800: first direction conversion member
801: first connection path
802: second connection path
810: first plate
811: first connection path formation swelling part
811a, 811b: end part of first connection path formation swelling part
812: second connection path formation swelling part
812a, 812b: end part of second connection path formation swelling part
813: first communication port
814: second communication port
815: one edge of first plate
820: second plate
821: first connection path formation swelling part
821a, 821b: end part of first connection path formation swelling part
822: second connection path formation swelling part
822a, 822b: end part of second connection path formation swelling part
825: one edge of second plate
830: intermediate plate
831: first notch
832: second notch
900: second direction conversion member
901: third connection path
902: fourth connection path
910: first plate
911: third connection path formation swelling part
911a, 911b: end part of third connection path formation swelling part
911c, 922c: bent part
912: fourth connection path formation swelling part
912a, 912b: end part of fourth connection path formation swelling part
913: third communication port
914: fourth communication port
915: one edge of first plate
920: second plate
921: third connection path formation swelling part
921a, 921b: end part of third connection path formation swelling part
922: fourth connection path formation swelling part
922a, 922b: end part of fourth connection path formation swelling part
925: one edge of second plate
930: intermediate plate
931: first notch
932: second notch
933: through hole
D: dash panel
E: engine room
R: vehicle cabin

## Claims

1. An internal heat exchanger (100, 200, 300, 400, 500) to be mounted in a freezing cycle (1) of a vehicle air conditioning apparatus including a compressor (2), a condenser (3), an expansion device (4), and an evaporator (5), the internal heat exchanger **characterized by**:
a heat exchanging unit (110, 210, 310, 410, 510) including plate-like members laminated with one another, the heat exchanging unit performing a heat exchange via a cooling medium between a first heat exchanging path (111) through which the cooling medium introduced from the condenser to the expansion device flows and a second heat exchanging path (112) through which the cooling medium introduced from the evaporator to the compressor flows;
a cooling medium outlet inlet part (120) through which a first inflow path (121) and a first outflow path (122) pass, the cooling medium introduced from the condenser to the first heat exchanging path flowing through the first inflow path, the cooling medium introduced from the second heat exchanging path to the compressor flowing through the first outflow path; and
an expansion device connection part (130) through which a second outflow path (132) and a second inflow path (131) pass, the cooling medium introduced from the first heat exchanging path to the expansion device flowing through the second outflow path, the cooling medium introduced from the expansion device to the second heat exchanging path flowing through the second inflow path,
wherein the expansion device connection part has a first screw path-through part (133, 533),
the internal heat exchanger is detachably fixed to the expansion device by a fixing member (140) including a screw head (141) and a screw shaft (142), and
the screw shaft is passed through the first screw path-through part (133, 533) and inserted into a fourth screw path-through part (41) provided in the expansion device.

2. The internal heat exchanger according to claim 1,
wherein the cooling medium outlet inlet part (120) is fixed to one of the plate-like members disposed on one surface of the heat exchanging unit (110, 210),
the expansion device connection part (130) is fixed to another one of the plate-like members disposed on the other surface of the heat exchanging unit,
the cooling medium outlet inlet part (120) and the expansion device connection part (130) are disposed back to back across the heat exchanging unit,
the cooling medium outlet inlet part (120) has a second screw path-through part (123) in a position in which the second screw path-through part is aligned with the first screw path-through part (133),
the heat exchanging unit has a third screw path-through part (113a, 213) between the second screw path-through part (123) and the first screw path-through part (133), and
the screw shaft (142) is passed through the second screw path-through part (123) and the third screw path-through part (113a, 213).

3. The internal heat exchanger according to claim 2,
wherein the heat exchanging unit (110) has a groove part (113) extending in a lamination direction of the plate-like members and
the third screw path-through part (113a) is a space in the groove part.

4. The internal heat exchanger according to claim 2,
wherein the heat exchanging unit (210) has projecting parts (214A, 214B) projecting in the same direction with respect to an inner layer part (210C) sandwiched between both surface layer parts (210A, 210B) of the heat exchanging unit in a lamination direction of the plate-like members,
the cooling medium outlet inlet part (120) is fixed to one projecting part (214B) of the projecting parts and the expansion device connection part (130) is fixed to the other projecting part (214A) of the projecting parts,
the projecting part (214A) to which the expansion device connection part is fixed has a first channel (215) leading to the first screw path-through part,
the projecting part (214B) to which the cooling medium outlet inlet part is fixed has a second channel (216) leading to the second screw path-through part, and
the third screw path-through part (213) includes a space in the first channel, a space in the second channel, and a space between the first channel and the second channel.

5. The internal heat exchanger according to claim 1,
wherein the cooling medium outlet inlet part (420) is fixed to one of the plate-like members disposed on one surface of the heat exchanging unit (410),
the expansion device connection part (130) is fixed to another one of the plate-like members disposed on the other surface of the heat exchanging unit (410),
the heat exchanging unit (410) has a third screw path-through part (413a) in a position in which the third screw path-through part (413a) is aligned with the first screw path-through part (133),
the fixing member (140) is capable of passing through the third screw path-through part, and
the screw shaft (142) is passed through the third screw path-through part (413a) and the screw head (141) is locked to an opening edge of the first screw path-through part (133) .

6. The internal heat exchanger according to claim 5,
wherein a countersunk part (133a) is provided in an end part of the first screw path-through part (133), the end part being close to the plate-like members, and
the screw shaft (142) is passed through the first screw path-through part and the screw head (141) is housed in the countersunk part.

7. The internal heat exchanger according to claim 1,
wherein the cooling medium outlet inlet part (520) is disposed close to one edge of the plate-like members,
the expansion device connection part (530) is disposed close to an opposite edge of the one edge of the plate-like members so that an opening of the first screw path-through part (533) faces the one edge,
the cooling medium outlet inlet part (520) and the expansion device connection part (530) are disposed on the same side in a lamination direction of the plate-like members, and
the screw shaft (142) is passed through the first screw path-through part (533) and the screw head (141) is locked to an opening edge of the first path-through part (533).

8. The internal heat exchanger according to claim 7,
wherein an inlet (111a) of the first heat exchanging path, an outlet (111b) of the first heat exchanging path, an inlet (121a) of the second heat exchanging path, and an outlet (121b) of the second heat exchanging path are opened in a surface of one of the plate-like member disposed on one surface of the heat exchanging unit,
the cooling medium outlet inlet part (520) is disposed so that the first inflow path (121) and the first outflow path (122) are substantially parallel to a line extending from the first screw path-through part (533),
the expansion device connection part (530) is disposed so that the second outflow path (132) and the second inflow path (131) are substantially parallel to the line extending from the first screw path-through part (533),
the internal heat exchanger (500) has a first direction conversion member (800) making connection between the heat exchanging unit (510) and the cooling medium outlet inlet part (520) and a second direction conversion member (900) making connection between the heat exchanging unit (510) and the expansion device connection part (530),
the first direction conversion member (800) has a first connection path (801) making connection between the first inflow path and the inlet of the first heat exchanging path and a second connection path (802) making connection between the outlet of the second heat exchanging path and the first outflow path, and
the second direction conversion member (900) has a third connection path (901) making connection between the outlet of the first heat exchanging path and the second outflow path and a fourth connection path (902) making connection between the second inflow path and the inlet of the second heat exchanging path.

9. The internal heat exchanger according to claim 8,
wherein the inlet (111a) of the first heat exchanging path and the inlet (121a) of the second heat exchanging path are disposed close to the one edge of the plate-like members,
the outlet (121b) of the second heat exchanging path and the outlet (111b) of the first heat exchanging path are disposed close to the opposite edge of the one edge of the plate-like members,
the first direction conversion member (800) or the second direction conversion member (900) has a crossing part for disposing the first inflow path and the second outflow path close to the one edge and the second inflow path and the first outflow path close to the opposite edge by overhead-crossing the first connection path (801) and the second connection path (802) each other or overhead-crossing the third connection path (901) and the fourth connection path (902) each other, and
the crossing part is not disposed in the line extending from the first screw path-through part.

10. The internal heat exchanger according to any one of claims 7 to 9,
wherein the expansion device connection part (530) has a tab part (535) engaging the expansion device and
the first screw path-through part (533) and the tab part (535) are disposed so as to sandwich the barycenter of the expansion device connection part when the expansion device connection part is seen from a position in which the expansion device is disposed.

11. A freezing cycle (1) of a vehicle air conditioning apparatus including the internal heat exchanger according to any one of claims 1 to 10.
